## Europäisches Patentamt

## European Patent Office

## Office européen des brevets

(19)

(11) Publication number: **0 235 941**
**B1**

# EUROPEAN PATENT SPECIFICATION

(12)

(45) Date of publication of the patent specification:
02.05.90

(51) Int. Cl.⁴: **G01B 11/24, G01B 11/30**

(21) Application number: 87300848.6

(22) Date of filing: 30.01.87

(54) Surface measurement.

(30) Priority: 13.02.86 GB 8603563

(43) Date of publication of application:
09.09.87 Bulletin 87/37

(45) Publication of the grant of the patent:
02.05.90 Bulletin 90/18

(84) Designated Contracting States:
AT BE CH DE ES FR GR IT LI LU NL SE

(56) References cited:
EP-A- 0 075 032
DE-A- 3 318 678
FR-A- 2 076 193
FR-A- 2 562 236
GB-A- 1 521 351
GB-A- 2 146 116

(73) Proprietor: PILKINGTON PLC, Prescot Road, St. Helens
Merseyside WA10 3TT(GB)

(72) Inventor: Chandley, Paul John, Dr., 20 Easedale Drive
Ainsdale, Southport Merseyside PB8 3TL(GB)
Inventor: Hill, Barry Raymond, 123 Orsmkirk Rod
Rainford, St. Helens Merseyside, WA11 8JB(GB)

(74) Representative: Blatchford, William Charles et al,
WITHERS & ROGERS 4 Dyers Buildings Holborn,
London, EC1N 2JT(GB)

ACTORUM AG

## Description

This invention relates to surface measurement apparatus and methods which can be used, for example, to measure the topography of a surface such a a vehicle body panel.

Surface shape measurement apparatus are known which utilise the principle of Moiré fringe contouring in which the image of a grating or alternatively a pattern of parallel interference fringes is projected obliquely onto a surface to be measured, usually by means of a strong white light source such as a Xenon arc lamp, in the case of the grating, or by a high powered laser such as a water-cooled argon laser, in the case of the interference fringes. This projected grating or pattern of parallel interference fringes is then imaged by a camera lens and focussed onto a master grating, representative of either a flat surface or a required surface to which the surface being measured is compared.

Beating between the two respective patterns causes Moiré fringes to be formed. These Moiré fringes represent relative height contours between the master surface and the sample surface with the result that absolute height contours of the sample surface can be obtained. The sensitivity of this technique increases with increasing spatial frequency of the projected fringe pattern or grating and also with increasing angle of incidence of the projected pattern with respect to the object being measured. Of necessity, the surface of the object being examined must be diffusive in order to scatter light which can then be imaged by the camera system.

A major practical disadvantage of traditional Moiré fringe contouring techniques as per the above example is that the camera system must necessarily resolve the fringes on the object and yet the depth of focus of the camera lens must also be sufficient to accommodate the depth range of the object being measured. These requirements are directly conflicting and it is generally not possible to achieve high sensitivity when measuring an object with a large depth range. A further disadvantage arises in that normally a high powered laser or white-light source is required since the interference fringe pattern or grating is projected onto the whole of the sample surface. This sets an upper practical limit on the size of surface which can be effectively measured without increasing the cost or complexity of such a system to unacceptably high levels.

It is an object of the present invention to provide surface measurement apparatus and methods in which the aforementioned disadvantages are obviated.

According to the invention there is provided surface measurement apparatus comprising a light source, means for relatively scanning light from the light source obliquely over a sample surface to be measured, optical means adapted to focus scanned light diffusely reflected from said sample surface onto a master grid or grating to therewith sequentially produce a Moiré-type pattern, detector means for detecting intensity variations of the Moiré-type pattern to provide sample signals representative of respective sequentially scanned parts of the sample surface, means to generate a reference signal for comparison therewith, and means to compare the phases of said sample and reference signals to thereby obtain real-time signals indicative of the surface shape being scanned.

Preferably, the light source provides coherent light by means of a laser which, because the light is scanned and not diverged over the surface to to measured, is conveniently a low-powered laser such as a helium neon laser.

The means for scanning light from the light source may comprise a pair of mutually orthogonal galvanometrically driven mirrors which scan the light over the surface to be measured in a raster-type scan, typically of 100 lines. An alternative to this may be that the surface to be measured itself could be moved relative to the light source, for example when the surface to be measured is on part of a moving production line, in which case the need to scan over such a surface in a raster-type scan may be obviated if it is simply required to measure e.g. the profile of samples as they pass by the measurement apparatus.

The optical means used to focus scanned light diffusely reflected from the surface being measured onto the master grid or grating may conveniently comprise a camera lens which may have a single or multiple elements and also be variably focussable in order to accommodate a relatively large depth range of the surface being measured, if required.

A filter can be used in or adjacent to the optical means to prevent ambient light interfering with light from the light source reflected off the surface, in which case the filter may be a band-pass filter of dielectric or holographic type.

The master grid or grating may be provided on a glass or other transparent substrate on which parallel lines are etched in a grid pattern of equal spacing. There may be a range of such grids or gratings provided for the apparatus, varying from coarse to fine to thereby vary the accuracy with which measurements can be obtained by the apparatus as required.

The detector means may comprise a photo-diode or more usually a photo-multiplier to amplify the electrical signals produced. The optical means to produce with the master grating a Moiré-type pattern and also the means to generate a reference signal for comparison with the sample signals may take alternative forms. A first form includes an arrangement in which an optical interferometer is disposed in the light path from the light source to the scanning means, the interferometer providing two essentially parallel beams of light, which when focussed by a lens onto the sample surface to be measured produce an interference pattern in the form of a grid or grating of equi-spaced parallel lines. The interferometer may be provided with means to modulate the phase of the component parts of the interference pattern produced by the interferometer, which modulation means may conveniently take the form of a light refracting plane parallel optical flat disposed in the light path of each arm of the interferometer and driven in an oscillating manner to thereby increase and decrease the respective optical light path of each arm of the interferometer and hence thereby cyclically change the phase difference between each arm of the interferometer. By so modulating the phase, the light focussed onto the surface to be measured is composed of a grid or grating pattern which has a continuous sideways shift of the interference fringes making up the grid or grating, with each fringe replacing the previous one in position every time one complete 2 pi phase change occurs.

Other means of modulating the light output of the interferometer can be used such as by using piezoelectric or galvanometrically driven mirrors in the interferometer, known in the art of interferometry.

The reference signal generating means for this first form is conveniently provided by means for splitting-off part of the beam of light produced by the interferometer and a focussing lens for focussing this split-off portion of light onto a separate reference detector. The detector may be in the form of a photo-diode or photo-multiplier as required. In a first embodiment of the invention to be described in detail later, the reference signal is derived by electronically measuring the intensity variations, produced by the phase modulator, at the reference detector. This reference signal is then simply compared with the sample signals in order to obtain real-time signals indicative of the surface shape being scanned.

In more refined second and third embodiments of the invention a reference grid or grating is provided in association with the reference detector such that the interferometer has a reference arm which is essentially a scaled down version of the sampling part of the surface measurement apparatus. In this way, absolute height contours of the object being measured can be obtained. A still further refinement is also shown in the third embodiment of the invention, in which the phase modulator is dispensed with and phase changes are produced instead by arranging for the scanning means to scan the beam of light from the interferometer in a line scan essentially orthogonal to the line scan of the first and second embodiments of the invention. In this way, the interference fringes within the focussed spot of light being scanned across the surface to be measured also effectively cross the grid or grating lines in the two (i.e. master and reference) grids or gratings simultaneously during each scan and therefore relative phase changes can be easily derived.

The second form of optical means and reference signal generating means dispenses with the requirement for an interferometer and reference arm in the apparatus and instead comprises means to expand the beam of light produced from the light source and then optically reduce or focus it to a very small spot of light which can then be scanned by the scanning means in a raster-type scan over the surface being measured. Provided that this focussed spot of light is reduced to a sufficiently small diameter, it can be regarded as being equivalent to the bright half of a single interference fringe which would otherwise be produced by means of an interferometer.

In this arrangement a Moiré-type pattern is still produced with the master grating over one complete scan of the scanning means. Although it is perfectly possible, in this form of the invention, to provide a separate reference by means of a beam-splitter which splits off part of the beam providing the small spot of light produced which can then be focussed onto a reference grid or grating, nevertheless it will be appreciated that the signal produced by the use of such a reference grid or grating would be simply a cyclically varying sinusoidal signal. Therefore, in this second form of the invention it is further advantageous to dispense with a separate reference arm altogether and provide a reference signal which is derived entirely electronically, for example by generation of a square wave by a square wave oscillator.

The second form of the invention may be further simplified by dispensing with the requirement for a beam expander and reducer/focusser, provided that the beam of light from the light source is itself sufficiently small or the master grid or grating sufficiently large so that in either case the spot of light on the sample surface has a diameter which, when focussed by the optical means onto the master grid or grating, is equal to or less than half each line spacing of the grid or grating and can still therefore be regarded as being equivalent to the bright half of a single interference fringe.

The invention also extends to a method of surface measurement and accordingly the invention also provides a method of surface measurement which includes the steps of scanning light from a light source obliquely over a sample surface being measured, focussing scanned light diffusely reflected from said sample surface onto a master grid or grating, to thereby sequentially produce a Moiré-type pattern, detecting the intensity variations of the Moiré-type pattern to provide sample signals representative of respective sequentially scanned parts of the sample surface, generating a reference signal for comparison with said sample signals, comparing the phases of said sample and reference signals and thereby deriving real-time signals indicative of the shape of the surface being scanned.

The invention will now be described, by way of example only, with reference to the accompanying drawings in which:

Fig. 1 is a schematic view of surface measurement apparatus according to a first embodiment of the invention.

Fig. 2 is a schematic view of surface measurement apparatus according to a second embodiment of the invention.

Fig. 3 is a schematic view of surface measurement apparatus according to a third embodiment of the invention.

Fig. 4 is a simplified diagram of an electronic circuit for use with the embodiments of the invention shown in Figs. 1-3.

Fig. 5 is a schematic view of surface measurement apparatus according to a fourth embodiment of the invention.

Fig. 6 is a simplified diagram of an electronic circuit for use with the embodiment of the invention shown in Fig. 5.

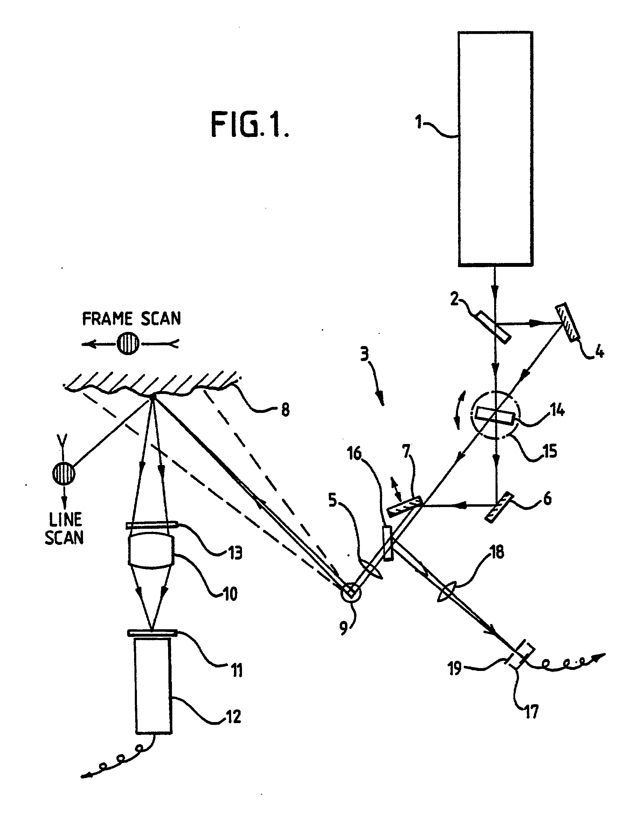

Referring firstly to Fig. 1 of the drawings, apparatus according to a first embodiment of the invention comprises a coherent light source 1 in the form of a helium-neon laser which produces coherent light, shown arrowed. This coherent beam of light is split into two separate beams by the use of a beam-splitter 2 forming part of an interferometer shown generally at 3. The beam of light which is reflected by the beam-splitter 2 is directed towards a fixed mirror 4 from where it is reflected towards a focussable lens 5 at the other end of the interferometer 3. The beam of light which is transmitted through the beam-splitter 2 is also directed onto a fixed mirror 6 from where it is reflected towards a moveable mirror 7 adjacent the light path between mirror 4 and lens 5. Mirror 7 re-directs light from mirror 6 through the lens 5 substantially parallel with the beam of light from mirror 4.

The two substantially parallel beams of light imaged by lens 5 which now have a relative phase difference, are then focussed onto a sample surface 8 to be measured via a scanner 9. The two coincident spots of light focussed onto the sample surface thus optically interfere with each other to give a single spot containing vertical interference fringes, the spacing of the fringes being set by the angle between the two incident beams of light.

The scanner 9 comprises a pair of galvanometrically driven mutually orthogonal mirrors (not shown) of conventional type which scan the focussed light from the lens 5 over the surface to be measured 8 in a raster-type scan, typically of 100 lines. The line scan (shown magnified) in this embodiment of the invention is vertical and sweeps down the surface of the object to be measured. After the completion of each line scan the focussed spot of light is then moved across the surface of the object being measured by a distance approximately equal to the width of the focussed light spot and so on. The width of that part of the object which is being scanned by the scanner 9 is referred to hereafter in this embodiment of the invention as the frame scan, as opposed to the line scan which is the downward scan of the scanner 9.

The scanner 9 in one complete scan over the surface of the object being measured reproduces the effect of a large continuous grating or pattern normally produced with conventional Moiré fringe contouring techniques as described in the preamble but without the need for the light source 1 to project the whole of the grating or pattern over the whole of the object area being covered by any one measurement.

Optical means in the form of a camera lens 10 is disposed with its axis generally orthogonal to the surface being measured and is used to image the focussed spot of light onto a master grating 11 which comprises a transparent substrate upon which are etched or otherwise formed a series of fine parallel lines having a spacing substantially equal to the spacing of the fringes present in the focussed image, at the grating, of the spot of light on the surface being measured.

Adjacent and behind the master grating 11 is detector means in the form of a photomultiplier 12 which is used to detect the variations of the light intensity produced by the Moiré fringe pattern created at the grating 11 in a manner to be described subsequently.

Adjacent the camera lens 10 between it and the surface 8 being measured is a narrow band optical filter 13, which may be holographic or dielectric, which permits transmission of substantially only that wavelength band of light emitted by the light source 1 and reflects or absorbs all other wavelength bands. In this way, ambient light conditions surrounding the apparatus are prevented from causing interference with the grating 11.

Where the two light paths produced by the beam-splitter 2 at first intersect in the interferometer 3 is disposed phase modulation means in the form of a plane-parallel optical plate 14 which roughly bisects the angle of intersection of both of the optical paths as shown. The optical plate 14 is connected to an electric motor 15 (shown in outline only) which is adapted to drive the optical plate 14 in an oscillating manner identical to the manner described in more detail in our co-pending U.K. patent application, number 8525650 (GB-A 2 181 837 published 29 Apr 1987), the disclosure of which is incorporated herein by reference. In this arrangement, as both optical paths share the same optical plate 14, oscillation by motor 15 causes an increase in the angle of the plate in the one light path which occurs simultaneously with a decrease in the angle of the plate in the other light path. As a result, a substantially linear phase modulation is achieved.

This phase modulation causes continuous sideways shift of the vertical interference fringes present in the focussed spot of light on the surface 8 being measured as the focussed spot of light is scanned over the surface by the scanner 9. It will therefore be apparent that as the plate 14 rotates in one direction, the interference fringes present in the focussed spot of light move linearly within the pattern formed and one fringe replaces the previous one in position every time one complete 2 pi phase change occurs. The relative signals and timings of movement of the optical plate 14 are arranged to give, in this example, 100 complete 2 pi phase changes during each line scan downwards, thus in the absence of any object height changes on the surface 8 being measured, as each line is scanned the image of the fringe pattern scans down the master grating 11 and so the resulting Moiré pattern signal undergoes the same 100 cycles of modulation.

Since the interference fringes in the focussed spot of light are projected by the scanner 9 obliquely onto the object being measured, height changes produce corresponding variations of the sideways shifts of the image of the interference fringes on the master grating 11. Therefore, the height changes produce phase changes in the Moiré pattern in addition to the 100 phase changes imposed by the optical plate 14.

To decode this relative height information a reference signal is required to which the phase changes of the Moiré pattern can be compared but which reference signal only contains the 100 phase changes produced by the phase modulator. This reference signal is derived by means of a reference arm in the interferometer 3 which comprises a beam-splitter 16 used to split off part of the two substantially parallel beams of light focussed by lens 5, before the beams reach the lens. This split off pair of beams is then focussed onto a detector 17 by means of an imaging lens 18. The detector 17 is a conventional photo-diode and is provided with an aperture stop 19 which prevents or inhibits interference with the detector 17 by ambient light conditions. Lens 18 produces coincident focussed spots of light on the detector 17 which contain an interference fringe pattern of the same type present in the focussed spot of light on the surface of the object being measured. The diameter of aperture stop 19 is chosen to be equal to or less than half the fringe spacing so that the fringes are resolvable by the detector 17.

In operation, the intensity variations in the Moiré pattern are detected by the photomultiplier 12 which emits signals that can be conveniently called the sample signals, and these are compared with the reference signal emitted by the detector 17 and the phase difference is measured once every 2 pi phase change of the reference signal. Since, in this example there are one hundred phase changes per line scan, there are a corresponding 100 height measurements obtained per line scanned of the surface of the object being measured.

An electronic circuit, to be described subsequently, measures each of the 100 lines per frame (i.e. the width of the object being measured) such that there are 100 x 100 separate measurements made over one complete scan by the scanner. This gives a total of 10,000 points of measurement per complete scan of the sample surface, which can easily be captured in approximately 5 seconds with a suitable micro-computer of conventional type. These individual height measurements are each measured accurately to a fraction of a Moiré pattern interval, of typically 1/120 of a fringe, and this data is stored in micro-computer memory for analysis. In this way, it is possible over the whole of the scanned surface to build up a highly accurate picture of the topography in real-time which may be displayed upon e.g. a colour T.V. monitor which is updated every 5 seconds. The colour T.V. monitor may conveniently be provided with a multi-contour map such as an 8 colour contour map with each colour being representative of respective parts of the fringe contour interval of the Moiré pattern.

In order to change the sensitivity of measurement, the spacing of the lines on the master grating 11 can be changed from e.g. a coarse grating to a fine grating. When this is done, the translatable mirror 7 must be adjusted to match the interference fringe pattern in the focussed spot produced by the lens 5 to the spacing on the lines of the new grating so that a Moiré-type pattern can be subsequently formed. Additionally, the size of the frame scan of the scanner 9 must be adjusted to synchronize the grating constructed by the scanner 9 over one complete scan with the master grating 11.

If it is required to measure in one scan larger sized objects than that shown in Figure 1 it is necessary to place such an object further away from the camera lens 10 and if necessary change the lens 10 to one having an appropriate focal length. Similarly, the frame scan of the scanner 9 must also be readjusted and lens 5 refocussed for each size change. Of course, when measuring smaller objects than that depicted in Fig. 1, such objects would be moved closer to the camera lens 10 in which case the same type of adjustment would again be necessary.

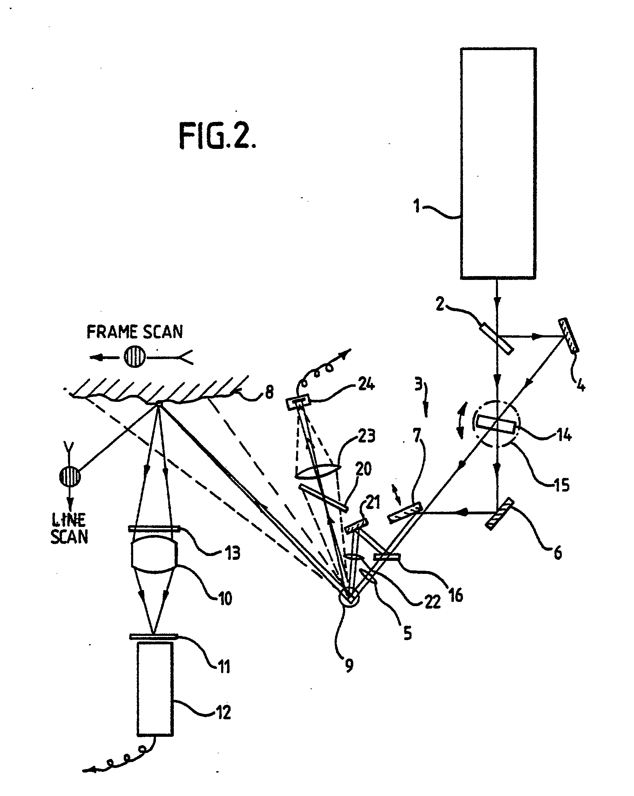

It will be appreciated that in the embodiment shown in Figure 1 it is necessary to manually adjust the size of the frame scan to give a continuous grating effect upon any given surface to be measured. This requirement is obviated in the second embodiment of the invention, shown in Figure 2, where like parts are given the same reference numerals as in Figure 1 for convenience. In the drawing, it will be seen that there is a light source 1, an interferometer shown generally at 3 for splitting the light source into two roughly equal parts, a focussing lens 5 for focussing the two beams of light into a single spot on surface 8 to be measured, in which the single spot of light has a grating in the form of vertical light and dark interference fringes. A scanner 9 is used to scan this focussed spot of light over the surface to be measured, which focussed spot of light is imaged through a camera lens 10 onto a master grating 11 thereby once again to produce Moiré-type patterns or contours which are detected by a photo-multiplier 12. A narrow band filter 13 is disposed adjacent the camera lens 10, as in Figure 1.

In the embodiment shown in Figure 2 the major difference from that of Figure 1 lies in the construction of the reference arm which now includes a reference grating 20 generally identical to the master grating 11 adjacent photo-multiplier 12. The beam-splitter 16 in this embodiment is used to split off a small proportion of the two parallel beams produced by the interferometer 3. This split-off portion is redirected by a mirror 21 through a lens 22 onto the scanner 9 at such an angle that the split-off beams of light do not overlap with the original sample beams from the interferometer 3, focussed by lens 5, which are being scanned over the surface 8 being measured. Lens 22 focusses the two split-off beams of light onto the reference grating 20, and this focussed spot of light is scanned over the reference grating 20 in synchronism with the original focussed spot of light being scanned over the surface 8 being measured by the scanner 9.

The resulting Moiré pattern produced with the reference grating 20 is collected by a lens 23 by which the light is focussed onto a photo-detector 24, similar in function to photo-detector 17 in Figure 1.

The focal length of lens 22 is chosen to be equal to the image distance of the camera lens 10 to the master grating 11. Also, the angular orientation of the reference grating 20 to the split-off focussed spot of light being scanned across it by the scanner 9 is identical to the angular orientation of the object 8 being measured relative to the original focussed spot of light being scanned in synchronism by the scanner 9.

Thus, essentially, the reference arm is a scaled down version of the sample scanning arm and so the two systems i.e. reference and sample arms, have the same discontinuities in the scanned Moiré pattern produced. The result of this is that the frame scan can now be any size and no longer requires adjustment, in contrast to the first embodiment of the invention, since a continuous grating is no longer essential. Also, absolute height contours of the object can now be obtained since the reference used is effectively the surface of the plane of the grating 20. In all other respects, operation of the embodiment shown in Figure 2 is identical to that shown in Figure 1.

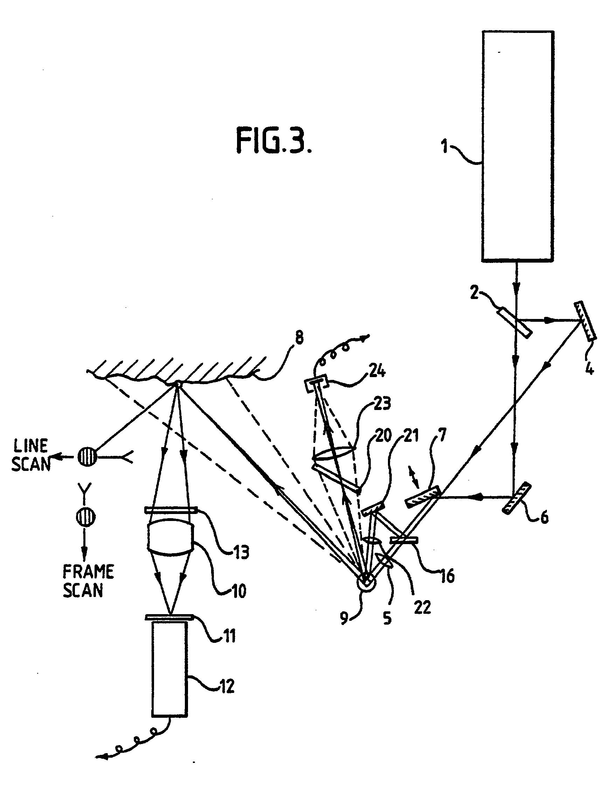

A third embodiment of the invention is shown in Figure 3 of the accompanying drawings where again like parts are numbered identically with like parts of Figures 1 and 2 for convenience.

The apparatus shown in Figure 3 of the drawings is essentially identical to that shown in Figure 2 with the exception that the phase modulation means is no longer present . Phase modulation of the signal being measured is still required however, and this is achieved by changing the direction of the line scan to that shown, i.e. a horizontal line scan with a vertical frame scan. In this arrangement, the vertical interference fringes within the scanned spot cross the lines of the master grating 11 and the reference grating 20 during the line scan horizontally. 100 phase changes can thus be obtained by arranging for the line scan to cross 100 grating lines of the grating 11 and the reference grating 20. This means in effect that if, say, gratings 11 and 20 are substituted for other gratings having greater or less a sensitivity, the size of the line scan must also be adjusted to maintain 100 measurements per line scan, according to the chosen data collection rate in this embodiment of the invention. This can be simply achieved by arranging for selected pairs of gratings to be available and corresponding ranges of amplifier gains in the electronic circuitry accompanying the apparatus, to be described later.

It will therefore be seen that the embodiment of the invention shown with reference to Figure 3 is further simplified to that of the embodiments in Figures 1 and 2.

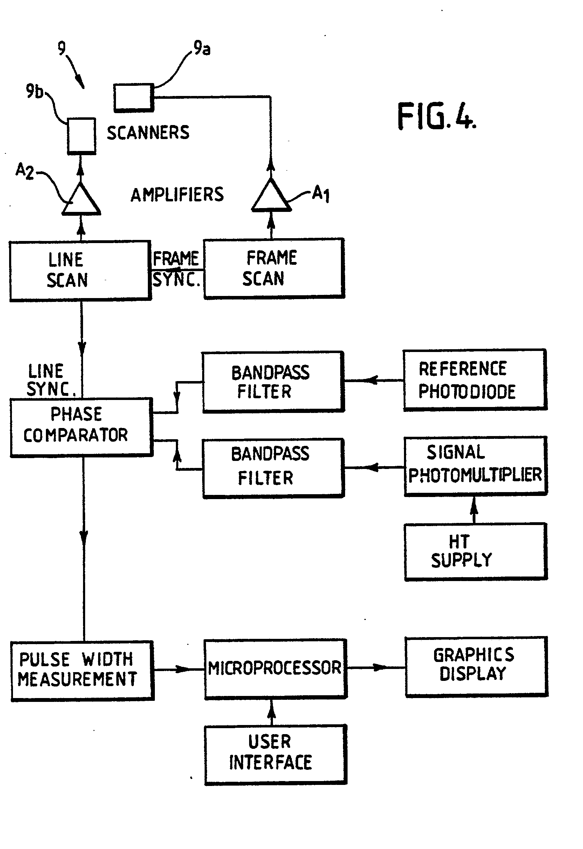

The electronic system by which phase changes can be measured in accordance with the embodiments of Figures 1 to 3 is illustrated in Figure 4. In the drawing, parts of the scanner 9 are shown comprising two mutually orthogonal mirrors 9a and 9b which are used to provide frame scan and line scan as described previously. The frame scan, i.e. that scan orthogonal to the line scan in each case, being horizontal in the case of Figures 1 and 2 and vertical in the case of Figure 3, is provided by an amplifier A1, which provides a staircase voltage to drive mirror 9a such that the voltage remains constant during each line scan but steps up by a small increment at the end of each line scan until the completion of one complete frame scan, whereafter the frame scan resets to the beginning and the process is repeated.

The frame scan synchronisation with the line scan is achieved by a suitable pulse after each step of the staircase voltage which thereby resets the line scan. After 100 lines of the frame scan the frame is reset to the beginning.

The line scan is achieved by a saw tooth voltage, i.e. the drive voltage increases at a constant rate until the frame synchronisation pulse referred to above resets it to the start voltage and so on. The line scan is provided by amplifier A2 which feeds scanning mirror 9b as shown.

The line scan synchronisation is achieved also by a pulse which commences just after the start of the scan of each line and this pulse signals the start of measurements to a phase comparator. The phase comparator is also provided with information from a sample photo-multiplier (photo-multiplier 12 in Figures 1 to 3). Similarly, the phase comparator is also provided with a signal from a reference photo-diode (the detector 17 in Figure 1 and the detector 24 in Figures 2 and 3). The electrical signal from the photo-multiplier, which is powered by means of a high tension DC supply voltage, is filtered by means of a band-pass filter which removes high frequency noise and low frequency mains-related interference from the system. Similarly, the electrical signal from the reference photo-diode is also band-pass filtered for the same purpose.

In the phase comparator, each signal from the reference photo-diode and the sample photo-multiplier are adjusted to the form of a square wave in each case, which ensures that any variations in amplitude of each wave are removed. Each square wave signal can then simply be regarded as a set of pulses and since there are two sets of such pulses i.e. reference pulses and sample pulses, it is possible to compare them to obtain phase difference measurement. This is achieved by providing that the leading edge of each reference pulse sets a bistable element or "flip-flop" and the subsequent leading edge of each sample pulse resets this bistable element. The bistable element output for each scan line is then a train of 100 pulses where the length of each pulse is proportional to the phase difference between corresponding pairs of reference and sample pulses and thus indicative of the relative height differences of the surface being scanned.

The phase differences are obtained by pulse width measurement. This is achieved by starting a counter at the beginning of each pulse which is incremented once every micro second, which may conveniently be the clock rate of the micro processor being used, until the end of the pulse. The count for each pulse is then transferred to the microprocessor as a phase measurement of between 0 and 120 corresponding to an actual phase difference of between 0 and 2 pi.

From the microprocessor, the phase measurements obtained can be displayed on a suitable graphics display such as a multi-colour television monitor.

The mode of operation of the system can be chosen so that the graphics display could measure absolute contours or relative contours, which may be displayed in e.g. eight colour graphics, each colour being representative of ranges of height contours.

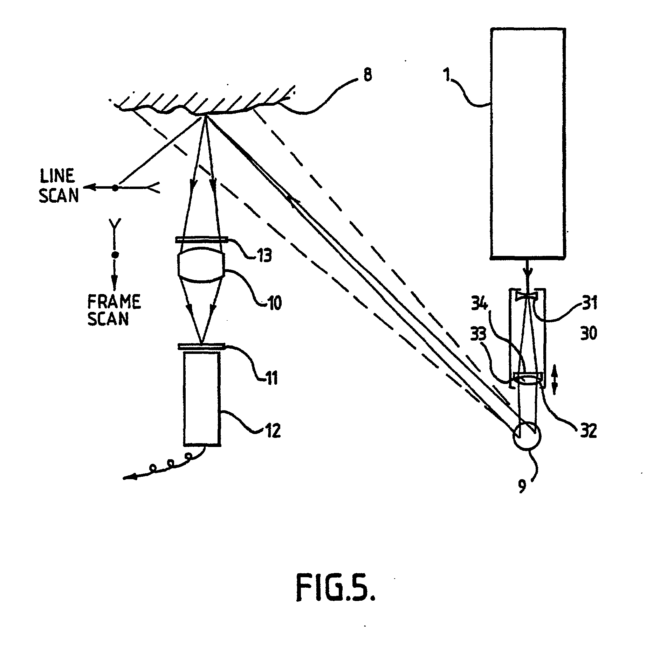

A fourth embodiment of the invention will now be described with reference to Figure 5, which following on from the description of Figure 3, discloses a simplified, but nevertheless extremely advantageous, arrangement. Once again like parts have identical numerals with like parts shown in Figures 1 to 3.

In the drawing it will be apparent that in this embodiment of the invention, the interferometer and reference arm have been omitted. The apparatus comprises essentially a coherent light source in the form of a laser 1 which directs light towards a combined beam expander and focusser 30 having a negative lens element 31 which is used to expand the beam by a factor of ten, in this example, and a converging lens system 32 comprising a lens doublet 33, 34 which is used to focus the expanded coherent beam into a very fine focussed spot on the surface 8 being measured via a scanner 9. This very small focussed spot of light is once again scanned in a raster-type scan of 100 lines with the line scan being horizontal, as shown, and the frame scan vertical. The focussed spot of light is imaged through a camera lens 10 onto a master grating 11. A narrow band filter 13 is also provided behind and adjacent the camera lens 10 and a photo-multiplier 12 is provided adjacent to the grating 11.

Utilization of the embodiment shown with reference to Figure 5 is possible as a consequence of the surprising realisation that the finely focussed spot of light can be thought of in one sense as being equivalent to the bright half of a single interference fringe, which could otherwise be provided by means of an interferometer as shown with reference to Figures 1 to 3. The combined beam expander and focusser 30 provides the necessary means whereby the focussed spot of light can be reduced to a sufficiently small diameter for this assumption to be valid.

A second surprising realisation underlying the principle of operation of this embodiment of the invention lies in the appreciation that if such a focussed spot of laser light is scanned during a line scan over a perfectly flat object at a constant speed then the image of the spot will cross the master grating 11 also at a constant speed and as a consequence, the resulting equivalent Moiré pattern signal from the photo-multiplier 12 will be a sinusoidal signal of constant frequency. When processed in the electronic system such a signal would result in a series of equal phase measurements, the reference signal required being simply a square-wave of the same constant frequency. Because of this surprising realisation, the reference signal which would normally be required and obtained by means of an interferometer is instead, in this fourth embodiment, generated entirely electronically, being obtained from a square-wave oscillator (not shown) which is restarted at the beginning of each line scan to maintain synchronisation throughout the frame scan.

Having established a reference signal, albeit entirely electronically, which is equivalent to the optical reference signal obtained in the embodiments shown with reference to Figures 1 to 3, the mechanism for generating Moiré pattern height contours in the embodiment shown in Figure 5 can be regarded as being equivalent to that described with reference to Figure 3. Since the focussed laser spot is focussed obliquely onto the object, height changes produce corresponding sideways shifts of the image of the spot on the grating 11 as the spot is scanned over the sample surface. The intensity variations in the Moiré pattern detected by the photo-multiplier 12 are then decoded as phase changes in the system and hence corresponding height changes when compared with the constant frequency electronically derived reference signal.

The spot of light must, as stated, be of sufficiently small diameter and by way of example, if a master grid or grating is used having twenty lines per millimeter, the spot of light being focussed onto the master grid or grating by the camera lens 10 must be equal to or less than about twenty-five microns, which means that the size of the spot being focussed onto the surface 8 being measured would typically be of the order of one millimetre in diameter. Obviously, the size of the required spot of light varies with the coarseness of the grid or grating used.

In practice, in order to obtain 100 measurements per line scanned the image of the laser spot, as with the embodiment shown in Figure 3, must cross at least 100 grating lines. Once again, this means that when the master grating is changed to change the sensitivity of measurement the size of the line scan must be suitably adjusted to maintain the 100 measurements per line. However, since in this embodiment of the invention there is only one grating to change this can easily be automated by having a range of interchangeable gratings and a corresponding range of switchable amplifier gains in the line scan drive electronics. The only requirement left is two simple focussing adjustments to the beam expander and the camera lens.

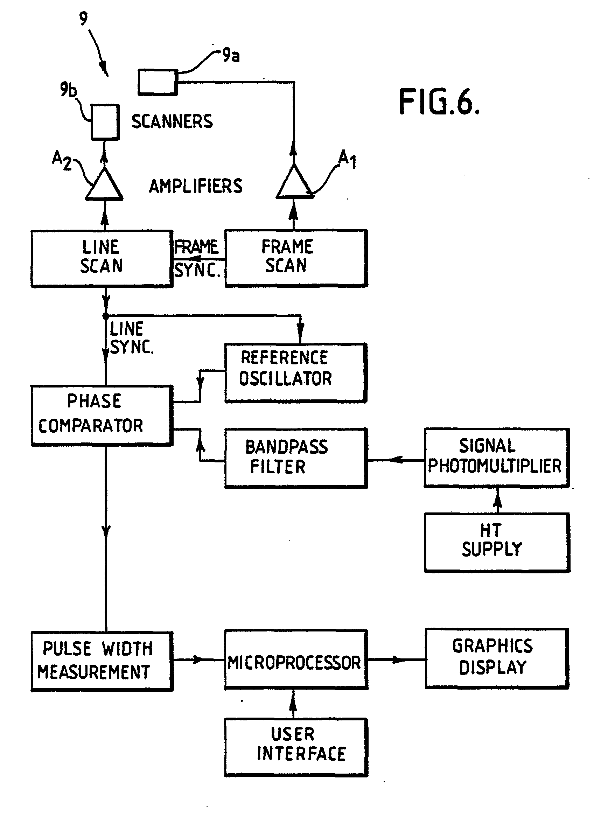

The electronic circuitry used in relation to the fourth embodiment of the invention is shown in Figure 6 in schematic outline which is basically similar with the schematic outline of the electronic circuit shown in Figure 4. The difference is that the reference photo-diode and band-pass filter are replaced by a reference oscillator which produces a suitable square wave. The reference oscillator is restarted at the beginning of each line using the line synchronisation pulse to thereby maintain synchronisation throughout the frame scan. In all other respects the description of operation is identical with that of Figure 4.

It will be seen from the foregoing that the invention provides a novel and convenient method of surface measurement using Moiré-type patterns, the phase of which is compared with the phase of a reference to thereby derive signals indicative of the shape of the sample surface being measured. By measuring phase differences, rather than simply measuring intensity variation in the Moiré-type pattern, to derive the required measurement, the advantage is obtained that relatively coarse grids or grating can be utilized which provides correspondingly large increments between each fringe contour interval, greater accuracy of measurement being obtained by measuring the phase changes within each fringe to a small fraction of, typically, 1/120 of a fringe. This arrangement thus permits the use of optical means having a large depth of focus, since a coarse grating can be used, and this in turn means that objects having relatively large depth ranges on the surface thereof can be measured accurately.

It will be understood that although in the various embodiments described light is focussed from the light source onto the surface being measured, the invention in its broadest aspect is not so limited and may, for example, include an arrangement whereby a sufficiently narrow beam of light is scanned over the surface directly from a laser light source.

It will also be understood that the light from the light source need not necessarily be coherent, although this is preferable.

## Claims

1. Surface measurement apparatus comprising a light source, means for relatively scanning light from the light source obliquely over a sample surface to be measured, optical means adapted to focus scanned light diffusely reflected from said sample surface onto a master grid or grating to therewith sequentially produce a Moiré-type pattern, detector means for detecting intensity variations of the Moiré-type pattern to provide sample signals representative of respective sequentially scanned parts of the sample surface, means to generate a reference signal for comparison therewith, and means to compare the phases of said sample and reference signals to thereby obtain real-time signals indicative of the surface shape being scanned.

2. Apparatus according to claim 1 further characterised in that the light source is a laser which provides coherent light for relatively scanning over a sample surface to be measured.

3. Apparatus according to claim 2 further characterised in that the laser is a low-powered laser, such as a helium-neon laser.

4. Apparatus according to any preceding claim further characterised in that the means for scanning light from the light source comprises a pair of mutually orthogonal galvanometrically driven mirrors adapted to scan the light over the surface to be measured in a raster-type scan.

5. Apparatus according to any one of claims 1 to 3 further characterised in that the means to scan light from the light source over the surface to be measured is achieved by moving the surface relative to the light source, for example when the surface to be measured is part of a production line.

6. Apparatus according to any preceding claim further characterised in that the optical means used to focus scanned light diffusely reflected from the surface being measured onto the master grid or grating comprises a camera lens of single or multiple elements, the lens being variably focussable in order to accommodate a relatively large depth range of the surface being measured, if required.

7. Apparatus according to any preceding claim further characterised in that it includes a filter in or adjacent to the optical means to prevent ambient light from interfering with light from the light source reflected off the sample surface.

8. Apparatus according to claim 7 further characterised in that the filter is a band-pass filter of dielectric or holographic type.

9. Apparatus according to any preceding claim further characterised in that the master grid or grating is provided on a glass or other transparent substrate on which parallel lines are etched in a grid or grating pattern of equal spacing.

10. Apparatus according to claim 9 further characterised by including a range of such grids or gratings, varying from coarse to fine to thereby vary the accuracy with which measurements can be obtained by the apparatus as required.

11. Apparatus according to any preceding claim further characterised in that the detector means comprises a photo-diode.

12. Apparatus according to any one of claims 1 to 10 further characterised in that the detector means comprises a photo-multiplier to amplify electrical signals produced.

13. Apparatus according to any preceding claim further characterised in that the optical means to produce with the master grid or grating a Moiré-type pattern and also the means to generate a reference signal as necessary includes an arrangement in which an optical interferometer is disposed in the light path of the light source, the interferometer providing two essentially parallel beams of light, which when focussed by a lens onto the sample surface to be measured produce an interference pattern in the form of a grid or grating of equi-spaced parallel lines.

14. Apparatus according to claim 13 further characterised in that the interferometer includes means to modulate the phase of component parts of the interference pattern produced by the interferometer.

15. Apparatus according to claim 14 further characterised in that the modulation means comprises a light refracting plane parallel optical flat disposed in the light path of each arm of the interferometer and driven by drive means in an oscillating manner to thereby increase and decrease the respective optical light path of each arm of the interferometer and hence thereby cyclically change the phase difference between each arm of the interferometer.

16. Apparatus according to claim 15 further characterised in that the drive means is a DC step motor.

17. Apparatus according to any one of claims 13 to 16 further characterised in that the reference signal generating means is provided by splitting-off part of the beam of light produced by the interferometer and focussing the split-off portion of light onto a reference detector by means of a focussing lens.

18. Apparatus according to claim 17 further characterised in that the reference detector is a photo-diode.

19. Apparatus according to claim 17 further characterised in that the reference detector is a photo-multiplier which amplifies electrical signals produced.

20. Apparatus according to any one of claims 17 to 19 further characterised in that the reference signal is derived by electronically measuring the intensity variations, produced by the phase modulation means, at the reference detector.

21. Apparatus according to any one of claims 17 to 19 further characterised in that the reference signal is derived by providing a reference grid or grating in association with the reference detector such that the interferometer has a reference arm which is essentially a scaled down version of the sampling part of the surfaced measurement apparatus.

22. Apparatus according to claim 13 further characterised in that phase changes are produced by arranging for the scanning means to scan the beam of light from the interferometer in a line scan essentially orthogonal to the lines in the master and reference grids or gratings such that the interference fringes in the beam of light, when scanned across the surface to be measured, also effectively cross the lines in the master and reference grids or gratings simultaneously, such that relative phase changes can be derived.

23. Apparatus according to any one of claims 1 to 12 further characterised in that the optical means to produce with the master grid or grating a Moiré-type pattern includes an arrangement in which a relatively small spot of light, of diameter which, when focussed onto the master grid or grating, is equal to or less than half each line spacing of the master grid or grating and is scanned over the sample surface in a direction generally orthogonal to the lines of the master grid or grating, to therewith sequentially produce a Moiré-type pattern.

24. Apparatus according to claim 23 further characterised in that the relatively small spot of light is provided by means to expand the beam of light from the light source and optically reduce or focus it to a required diameter on the sample surface.

25. Apparatus according to claim 23 or claim 24 further characterised in that the means to produce a reference signal includes a beam-splitter which splits off part of the scanned spot of light, a lens to focus the split-off portion of the spot onto a reference grid or grating, and detector means to thereby produce a cyclically varying reference signal.

26. Apparatus according to any one of claims 1 to 12 or claim 23 or claim 24 further characterised in that the reference signal is provided directly as an electronic signal.

27. Apparatus according to claim 26 further characterised in that electronic signal is derived by generation of a square wave.

28. Aparatus according to claim 27 further characterised in that the square wave is generated by a square wave oscillator.

29. A method of surface measurement which includes the steps of scanning light from a light source obliquely over a sample surface being measured, focussing scanned light diffusely reflected from said sample surface onto a master grid or grating, to thereby sequentially produce a Moiré-type pattern, detecting the intensity variations of the Moiré-type pattern to provide sample signals representative of respective sequentially scanned parts of the sample surface, generating a reference signal for comparison with said sample signals, comparing the phases of said sample and reference signals and thereby deriving real-time signals indicative of the shape of the surface being scanned.

**Patentansprüche**

1. Oberflächenmeßvorrichtung, die eine Lichtquelle, eine Einrichtung zum relativen Abtasten des Lichts der Lichtquelle schräg über einer zu messenden Prüfoberfläche, eine optische Einrichtung, die dazu geeignet ist, von der Prüfoberfläche streuend reflektiertes Licht auf ein Gitter oder Raster zu fokussieren, um damit aufeinanderfolgend ein Moiré-Muster zu erzeugen, eine Detektionseinrichtung zum Abtasten von Intensitätsänderungen des Moiré-Musters, um Prüfsignale, die für die jeweiligen aufeinanderfolgend abgetasteten Teile der Prüfoberfläche kennzeichnend sind, bereitzustellen, eine Einrichtung zum Erzeugen eines damit zu vergleichenden Referenzsignals und eine Einrichtung zum Vergleichen der Phasen des Prüf- und des Referenzsignals aufweist, um dadurch Echtzeitsignale zu erhalten, die für die abgetastete Oberflächenform kennzeichnend sind.

2. Vorrichtung nach Anspruch 1, dadurch gekennzeichnet, daß die Lichtquelle ein Laser ist, der kohärentes Licht zum relativen Abtasten einer zu messenden Prüfoberfläche bereitstellt.

3. Vorrichtung nach Anspruch 2, dadurch gekennzeichnet, daß der Laser ein Laser niedriger Energie, wie z.B. ein Heliumneonlaser ist.

4. Vorrichtung nach einem der vorangehenden Ansprüche, dadurch gekennzeichnet, daß die Einrichtung zum Abtasten von Licht der Lichtquelle ein Paar zueinander orthogonaler, galvonometrisch angetriebener Spiegel aufweist, die dazu geeignet sind, das Licht über einer zu messenden Oberfläche mittels einer rasterförmigen Abtastung abzutasten.

5. Vorrichtung nach einem der Ansprüche 1 bis 3, dadurch gekennzeichnet, daß die Einrichtung zum Abtasten von Licht der Lichtquelle über der zu messenden Oberfläche dadurch gebildet wird, daß die Oberfläche relativ zur Lichtquelle bewegt wird, z.B. wenn die zu messende Oberfläche Teil einer Fertigungslinie ist.

6. Vorrichtung nach einem der vorangehenden Ansprüche, dadurch gekennzeichnet, daß die optische Einrichtung, die verwendet wird, um das abgetastete, von der zu messenden Oberfläche gestreut reflektierte Licht auf das Hauptgitter oder -raster zu fokussieren, eine Kameralinse aus einem oder mehreren Elementen aufweist, wobei die Linse variabel fokussierbar ist, um, wenn erforderlich, einen relativ großen Tiefenbereich der zu messenden Oberfläche abdecken zu können.

7. Vorrichtung nach einem der vorangehenden Ansprüche, dadurch gekennzeichnet, daß sie in oder in der Nähe der optischen Einrichtung ein Filter enthält, das verhindert, daß Umgebungslicht störend auf das Licht der Lichtquelle, das von der Prüfoberfläche reflektiert wird, einwirkt.

8. Vorrichtung nach Anspruch 7, dadurch gekennzeichnet, daß das Filter ein dielektrisches oder ein holographisches Bandpaß-Filter ist.

9. Vorrichtung nach einem der vorangehenden Ansprüche, dadurch gekennzeichnet, daß das Hauptgitter oder -raster auf einem Glassubstrat oder einem anderen durchsichtigen Substrat vorgesehen ist, auf dem parallele Linien in Gitter- oder Rastermuster mit gleichen Abständen geätzt sind.

10. Vorrichtung nach Anspruch 9, dadurch gekennzeichnet, daß sie einen Bereich solcher Gitter oder Raster enthält, der von grob bis fein reicht, wodurch die Genauigkeit, mit der Messungen mit der Vorrichtung durchgeführt werden können, gemäß Erfordernis variiert werden kann.

11. Vorrichtung nach einem der vorangehenden Ansprüche, dadurch gekennzeichnet, daß die Detektoreinrichtung eine Photodiode aufweist.

12. Vorrichtung nach einem der Ansprüche 1 bis 10, dadurch gekennzeichnet, daß die Detektoreinrichtung zur Verstärkung von erzeugten elektrischen Signalen einen Fotoelektronenvervielfacher aufweist.

13. Vorrichtung nach einem der vorangehenden Ansprüche, dadurch gekennzeichnet, daß die optische Einrichtung zur Erzeugung eines Moiré-Gitters mit dem Hauptgitter oder -raster sowie die Einrichtung zum Erzeugen eines benötigten Referenzsignals eine Anordnung enthält, bei welcher ein optisches Interferometer im Lichtpfad der Lichtquelle angeordnet ist, wobei das Interferometer zwei im wesentlichen parallele Lichtstrahlen bereitstellt, die, wenn sie mittels einer Linse auf die zu messende Prüfoberfläche fokussiert werden, ein Interferenzmuster in der Form eines Gitters oder Rasters mit parallelen Linien gleichen Abstands erzeugen.

14. Vorrichtung nach Anspruch 13, dadurch gekennzeichnet, daß das Interferometer eine Einrichtung zur Modulation der Phase der Komponententeile des Interferenzmusters, das vom Interferometer erzeugt wird, enthält.

15. Vorrichtung nach Anspruch 14, dadurch gekennzeichnet, daß die Modulationseinrichtung eine lichtbrechende, ebene, parallele, optische Fläche aufweist, die im Lichtpfad eines jeden Interferometerarms angeordnet ist und die von einer Antriebseinrichtung oszillierend angetrieben wird, um den jeweiligen optischen Lichtpfad eines jeden Interferometerarms zu vergrößern und zu verkleinern, um dadurch die Phasendifferenz zwischen den Interferometerarmen zyklisch zu ändern.

16. Vorrichtung nach Anspruch 15, dadurch gekennzeichnet, daß die Antriebseinrichtung ein Gleichstromschrittmotor ist.

17. Vorrichtung nach einem der Ansprüche 13 bis 16, dadurch gekennzeichnet, daß die Referenzsignalerzeugungseinrichtung dadurch gebildet wird, daß ein Teil des Lichtstrahls, der vom Interferometer erzeugt wird, abgespalten wird und daß mittels einer Fokussierlinse der abgespaltene Lichtanteil auf einen Referenzdetektor fokussiert wird.

18. Vorrichtung nach Anspruch 17, dadurch gekennzeichnet, daß der Referenzdetektor eine Fotodiode ist.

19. Vorrichtung nach Anspruch 17, dadurch gekennzeichnet, daß der Referenzdetektor ein Fotoelektronenvervielfacher ist, der erzeugte elektrische Signale verstärkt.

20. Vorrichtung nach einem der Ansprüche 17 bis 19, dadurch gekennzeichnet, daß das Referenzsignal hergeleitet wird, indem die am Referenzdetektor von der Phasenmodulationseinrichtung erzeugten Intensitätsänderungen elektronisch gemessen werden.

21. Vorrichtung nach einem der Ansprüche 17 bis 19, dadurch gekennzeichnet, daß das Referenzsignal hergeleitet wird, indem ein Referenzgitter oder -raster in Zuordnung zu dem Referenzdetektor so vorgesehen ist, daß das Interferometer einen Referenzarm hat, der im wesentlichen eine maßstabsgetreue Verkleinerung des Prüfteils der Oberflächenmeßvorrichtung ist.

22. Vorrichtung nach Anspruch 13, dadurch gekennzeichnet, daß Phasenänderungen erzeugt werden, indem für das Abtasten Einrichtungen so angeordnet werden, daß sie den Lichtstrahl, der vom Interferometer kommt, in Zeilen, die im wesentlichen orthogonal zu den Linien in den Haupt- und Referenzgittern oder -rastern verlaufen, so abtasten, daß die Interferenzstreifen im Lichtstrahl, wenn sie quer über die zu messende Oberfläche abgetastet werden, auch die Linien in den Haupt- und Referenzgittern oder -rastern effektiv gleichzeitig kreuzen, so daß relative Phasenänderungen abgeleitet werden können.

23. Vorrichtung nach einem der Ansprüche 1 bis 12, dadurch gekennzeichnet, daß die optische Einrichtung die zusammen mit dem Hauptgitter oder -raster ein Moiré-Muster erzeugt, eine Anordnung enthält, in welcher ein relativ kleiner Lichtfleck mit einem Durchmesser, der, wenn er auf das Hauptgitter fokussiert wird, gleich oder weniger als halb so groß wie der Zeilenabstand des Hauptgitters oder -rasters ist und der in einer allgemein orthogonal zu den Linien des Hauptgitters oder -rasters liegenden Richtung über die Prüfoberfläche tastet, um damit aufeinanderfolgend ein Moiré-Muster zu erzeugen.

24. Vorrichtung nach Anspruch 23, dadurch gekennzeichnet, daß der relativ kleine Lichtfleck durch eine Einrichtung, mit der der Lichtstrahl der Lichtquelle ausgedehnt und auf einen geforderten Durchmesser auf die Prüfoberfläche optisch reduziert oder fokussiert wird, bereitgestellt wird.

25. Vorrichtung nach den Ansprüchen 23 und 24, dadurch gekennzeichnet, daß die Einrichtung zum Erzeugen eines Referenzsignals einen Strahlspalter, der einen Teil des abgetasteten Lichtflecks abspaltet, eine Linse zum Fokussieren des abgespalteten Teils des Flecks auf ein Referenzgitter oder -raster und eine Detektoreinrichtung enthält, um ein zyklisch sich änderndes Referenzsignal zu erzeugen.

26. Vorrichtung nach einem der Ansprüche 1 bis 12 oder Anspruch 23 oder Anspruch 24, dadurch gekennzeichnet, daß das Referenzsignal unmittelbar als ein elektronisches Signal vorgesehen ist.

27. Vorrichtung nach Anspruch 26, dadurch gekennzeichnet, daß das elektronische Signal durch Erzeugung einer Rechteckwelle hergeleitet wird.

28. Vorrichtung nach Anspruch 27, dadurch gekennzeichnet, daß die Rechteckwelle durch einen Rechteckoszillator erzeugt wird.

29. Verfahren zur Oberflächenmessung mit den Schritten: Abtasten von Licht einer Lichtquelle schräg über eine zu messende Oberfläche, Fokussieren von abgetastetem, gestreut von der Prüfoberfläche reflektiertem Licht auf ein Hauptgitter oder -raster, um dadurch aufeinanderfolgend ein Moiré-Muster zu erzeugen, Detektieren der Intensitätsänderungen des Moiré-Musters, um Prüfsignale, die die jeweiligen aufeinanderfolgend abgetasteten Teile der Prüfoberfläche kennzeichnen, bereitzustellen, Erzeugen eines Referenzsignals zum Vergleich mit dem Prüfsignal, Vergleichen der Phasen des Prüfsignals und des Referenzsignals, und daraus Herleiten von Echtzeitsignalen, die für die abgetastete Oberfläche kennzeichnend sind.

## Revendications

1. Appareil de mesurage de surface comprenant une source lumineuse, des moyens pour assurer un balayage relatif de la source lumineuse obliquement sur une surface d'échantillon à mesurer, des moyens optiques adaptés pour balayer en concentrant la lumière réfléchie par diffusion de ladite surface d'échantillon sur une grille principale ou de graduation pour produire au moyen de cette dernière séquentiellement un dessin du type Moiré, des moyens détecteurs pour détecter les variations d'intensité du dessin moiré pour fournir des signaux d'échantillon représentatifs des parties balayées séquentiellement correspondantes de la surface d'échantillon, des moyens pour engendrer un signal de référence pour comparaison avec ces signaux, et des moyens pour comparer les phases dudit échantillon et des signaux de référence de façon à obtenir de la sorte des signaux en temps réel qui indiquent la forme de la surface qui est balayée.

2. Appareil selon la revendication 1 caractérisé en outre en ce que la source lumineuse est un laser qui fournit une lumière cohérente pour assurer un balayage relatif sur la surface de l'échantillon à mesurer.

3. Appareil selon la revendication 2 caractérisé en outre en ce que le laser est un laser à faible puissance, tel qu'un laser hélium-néon.

4. Appareil selon l'une quelconque des revendications précédentes caractérisé en outre en ce que des moyens pour balayer la lumière de la source lumineuse comprennent une paire de miroirs entraînés par galvanométrie orthogonaux l'un par rapport à l'autre susceptibles de balayer la lumière sur la surface à mesurer selon un balayage en trame.

5. Appareil selon l'une quelconque des revendications 1 à 3 caractérisé en outre en ce que les moyens pour balayer la lumière provenant de la source lumineuse sur la surface à mesurer est obtenue en déplaçant la surface par rapport à la source lumineuse, par exemple lorsque la surface à mesurer fait partie d'une chaîne de production.

6. Appareil selon l'une quelconque des revendications précédentes caractérisé en outre en ce que les moyens optiques utilisés pour focaliser la lumière balayée réfléchie avec diffusion à partir de la surface mesurée vers la grille maître ou de calibrage comporte une lentille d'appareil photo comportant des éléments uniques ou multiples, la lentille étant susceptible de mise au point d'une façon variable de façon à couvrir une profondeur de champ relativement grande de la surface à mesurer si nécessaire.

7. Appareil selon l'une quelconque des revendications précédentes caractérisé en outre en ce qu'il comporte un filtre qui se trouve dans les moyens optiques ou au voisinage de ces derniers pour empêcher que la lumière ambiante n'interfère avec la lumière provenant de la source lumineuse réfléchie par la surface de l'échantillon.

8. Appareil selon la revendication 7 caractérisé en outre en ce que le filtre est un filtre passe-bande du type diélectrique ou holographique.

9. Appareil selon l'une quelconque des revendications précédentes caractérisé en outre en ce que la grille maître ou de calibrage est prévue sur un substrat en verre ou autre matériau transparent sur lequel des lignes parallèles ont été gravées suivant une grille avec une espacement régulier.

10. Appareil selon la revendication 9 caractérisé en outre en ce qu'on introduit une gamme de telles grilles qui varie des grilles larges à des grilles fines de façon à faire varier la précision avec laquelle les mesures peuvent être obtenues par l'appareil selon les besoins.

11. Appareil selon l'une quelconque des revendications précédentes caractérisé en outre en ce que les moyens détecteurs comportent une photodiode.

12. Appareil selon l'une quelconque des revendications 1 à 10 caractérisé en outre en ce que les moyens détecteurs comportent un multiplicateur de photons pour amplifier les signaux électriques produits.

13. Appareil selon l'une quelconque des revendications précédentes caractérisé en outre en ce que les moyens optiques pour produire avec la grille maître ou de calibrage un dessin du type Moiré et également les moyens pour engendrer un signal de référence si nécessaire comportent une disposition dans laquelle un interféromètre optique est disposé dans le trajet lumineux de la source lumineuse, l'interféromètre fournissant deux faisceaux de lumière sensiblement parallèles, qui lorsqu'ils sont focalisés par une lentille vers la surface de l'échantillon à mesurer produisent un dessin d'interférences sous la forme d'une grille ou d'une grille d'étalonnage comportant des lignes parallèles équidistantes.

14. Appareil selon la revendication 13 caractérisé en outre en ce que l'interféromètre comporte des moyens pour moduler la phase des composantes du dessin d'interférence produit par l'interféromètre.

15. Appareil selon la revendication 14 caractérisé en outre en ce que les moyens de modulation comportent un plan de réfraction de lumière parallèle optique plan disposé dans le trajet de chaque bras de l'interféromètre et entraîné par des moyens d'entraînement d'une façon oscillante de façon à augmenter et à diminuer le trajet lumineux optique correspondant de chaque bras de l'interféromètre et en conséquence de modifier d'une façon cyclique la différence de phase entre chaque bras de l'interféromètre.

16. Appareil selon la revendication 15 caractérisé en outre en ce que les moyens d'entraînement consistent en un moteur pas à pas à courant continu.

17. Appareil selon l'une quelconque des revendications 13 à 16 caractérisé en outre en ce que le moyen générateur de signal de référence est obtenu en coupant une partie du faisceau de lumière produit par l'interféromètre et en focalisant la partie coupée de lumière sur un détecteur de référence au moyen d'une lentille de focalisation.

18. Appareil selon la revendication 17 caractérisé en outre en ce que le détecteur de référence est une photo-diode.

19. Appareil selon la revendication 17 caractérisé en outre en ce que le détecteur de référence est un multiplicateur de photons qui amplifie les signaux électriques produits.

20. Appareil selon l'une quelconque des revendications 17 à 19 caractérisé en outre en ce que le signal de référence est dérivé par mesure électronique des variations d'intensité produites par des moyens de modulation de phase au détecteur de référence.

21. Appareil selon l'une quelconque des revendications 17 à 19 caractérisé en outre en ce que le signal de référence est dérivé en prévoyant une grille de référence associée avec le détecteur de référence de telle sorte que l'interféromètre ait un bras de référence qui est essentiellement une version à l'échelle réduite de la partie d'échantillon de l'appareil de mesurage de surface.

22. Appareil selon la revendication 13 caractérisé en outre en ce que les variations de phase sont produites en prévoyant pour les moyens de balayage, le balayage du faisceau de lumière à partir de l'interféromètre en balayage linéaire essentiellement orthogonal par rapport aux lignes des grilles maître et de référence simultanément de telle sorte que les franges d'interférences dans le faisceau de lumière, lorsqu'il est balayé à travers la surface à mesurer, coupe de façon effective les lignes des grilles maître et de référence simultanément, de telle sorte que les variations de phase relatives peuvent être dérivées.

23. Appareil selon l'une quelconque des revendications 1 à 12 caractérisé en outre en ce que les moyens optiques prévus pour produire avec la grille maître ou d'étalonnage un dessin du type Moiré comportent une disposition dans laquelle un point lumineux relativement petit, de diamètre qui, après focalisation sur la grille maître ou d'étalonnage, est égal à ou inférieur à la moitié de chaque espacement entre lignes de la grille et est balayé sur la surface d'échantillon dans une direction généralement orthogonale aux lignes de la grille de façon à produire séquentiellement un dessin du type Moiré.

24. Appareil selon la revendication 23 caractérisé en outre en ce que le point lumineux relativement petit est réalisé par des moyens de façon à agrandir le faisceau de lumière provenant de la source lumineuse et réduire optiquement ou focaliser ce dernier à un diamètre requis sur la surface d'échantillon.

25. Appareil selon la revendication 23 ou la revendication 24 caractérisé en outre en ce que les moyens pour produire un signal de référence comportent un découpeur de faisceau qui découpe une partie du point de lumière balayé, une lentille pour focaliser la partie découpée du point sur une grille de référence et des moyens de détection pour fournir de la sorte un signal de référence qui varie cycliquement.

26. Appareil selon l'une quelconque des revendications 1 à 12 ou selon la revendication 23 ou la revendication 24 caractérisé en outre en ce que le signal de référence est prévu directement en tant que signal électronique.

27. Appareil selon la revendication 26 caractérisé en outre en ce que le signal électronique est dérivé par génération d'une onde carrée.

28. Appareil selon la revendication 27 caractérisé en outre en ce que l'onde carrée est engendrée par un oscillateur d'onde carrée.

29. Procédé de mesurage de surface qui comporte les étapes qui consistent à balayer de la lumière à partir d'une source lumineuse obliquement sur une surface d'échantillon à mesurer, à focaliser la lumière balayée réfléchie avec diffusion à partir de ladite surface d'échantillon sur une grille maître ou d'étalonnage, de façon à produire de façon séquentielle un dessin du type Moiré, à détecter les variations d'intensité du dessin du type Moiré de façon à fournir des signaux d'échantillon qui sont représentatifs des parties balayées séquentiellement correspondantes de la surface d'échantillon, à engendrer un signal de référence en vue de sa comparaison avec les signaux d'échantillon, à comparer les phases dudit échantillon et des signaux de référence et, en conséquence, à dériver des signaux en temps réel qui indiquent la forme de la surface qui est balayée.

# FIG.1.

EP 0 235 941 B1

FIG.2.

FRAME SCAN

LINE SCAN

# FIG.3.

FIG.4.

FIG.5.

FIG.6.